# EUROPEAN PATENT SPECIFICATION

(11) **EP 4 051 610 B1**
(45) Date of publication and mention of the grant of the patent: **15.01.2025**
(21) Application number: 20801035.5
(22) Date of filing: 28.10.2020
(51) Int. Cl.: B65G 67/08

(54) **DEVICE FOR UNLOADING GENERAL CARGO**
VORRICHTUNG ZUM ENTLADEN VON ALLGEMEINEM LADEGUT
DISPOSITIF DE DÉCHARGEMENT DE CARGAISON GÉNÉRALE

(30) Priority: 29.10.2019 NL 2024121
(43) Date of publication of application: 07.09.2022
(73) Proprietor: Logisch B.V., 6902 AN Zevenaar (NL)
(72) Inventor: GROTERS, Antoon, 6902 AN Zevenaar (NL)
(74) Representative: 't Jong, Bastiaan Jacob
(86) International application number: PCT/NL2020/050668
(87) International publication number: WO 2021/086182

(56) References cited:
- JP-A- 2006 225 100
- JP-A- H09 100 011
- US-A- 5 718 325

## Description

The invention relates to a device according to the preamble of claim 1. Such a device is known from US 5,718,325.

The document JP2006-225100 A discloses a device for loading general cargo in a truck, which device comprises:
- a mobile driven chassis;
- a height-displaceable platform arranged on the chassis via a parallelogram-shaped rod system ;
- a conveyor track tiltable around a horizontal axis and arranged with a first end on the chassis,
- a tiltable table connected to the second end of the conveyor track, wherein the free end of the tiltable table reaches to a position above the platform;
- drive means for driving the tilting movement of the conveyor track; and
- coupling means arranged between the free end of the tiltable table and the platform and coupling means arranged between the second end of the conveyor track and the platform, so that the platform is displaced in the height with the tilting movement of the conveyor track.

Many goods are transported in shipping containers or in trucks. In order to make optimal use of the available space in for instance a shipping container the goods, usually boxes, are stacked directly on the bottom of the shipping container. With a view to making maximum use of the space, use is not made here of pallets.

Such a method of storing general cargo is particularly known for general cargo which has to be transported over large distances, such as goods being transported from China to Europe or the United States.

At their destination, these shipping containers have to be unloaded again. These shipping containers must then be unloaded by hand because the general cargo is placed not on pallets but on the bottom of the container. The general cargo is then picked up one by one by hand, and subsequently placed on an accordion roller conveyor for further processing. As the unloading of a container progresses and the general cargo is picked up further into the container, the accordion roller conveyor will be extended into the container.

The drawback of this method of unloading is that it is not ergonomic for the people handling the boxes. When boxes are picked up from the bottom, these boxes must be lifted to the level of the roller conveyor. On the other hand, boxes must also be picked up above a height of 2 metres. Depending on the weight of the boxes, this can be heavy work which is not ergonomic.

Because of the desire, and sometimes also the legal requirements, to improve the working conditions, the invention has for its object to reduce the above stated drawback.

This object is achieved with a device according to claim 1.

The device is mobile and driven, whereby it can be positioned in simple manner at the correct position in front of or in a shipping container or cargo space of a truck. The person (or persons) who will be unloading the items of general cargo takes up position on the platform and can move the platform to a desired height by tilting the conveyor track, whereby picking up of the boxes and items of general cargo can take place in ergonomically sound manner. The platform will thus first be brought into a high position so that the upper boxes can be removed from a stack and, as more boxes are removed from the stack, the platform is lowered.

Because the platform is coupled to the conveyor track, the conveyor track will have a fixed distance to the platform, whereby the person doing the unloading can always place the items of general cargo on the conveyor track at an optimal height.

With a flexible element, such as a cord, cable or chain, a tensile force can be transmitted so that the platform can be co-displaced with the tiltable conveyor track. When the conveyor track is tilted downward in order to thus also lower the platform, the platform eventually comes to lie on the ground. For the purpose of picking up the lowermost layer of general cargo, such as boxes, it can be advantageous to then be able to lower the conveyor track slightly further still, so that the person on the platform can place the boxes from the shipping container onto the conveyor track at substantially the same height in bending-down position. By using a flexible element for the coupling means it is possible to tilt the conveyor track further downward still when the platform lies against the ground.

In an embodiment of the device according to the invention the drive means comprise a linear actuator, such as a hydraulic cylinder, wherein the linear actuator is arranged between the chassis and the conveyor track, at a distance from the horizontal axis.

The drive means must be able to exert a great force in order to adjust both the conveyor track, the platform and a person on the platform in the height. A linear actuator, such as a hydraulic actuator, is highly suitable for this purpose.

In another embodiment of the device according to the invention a second conveyor track is arranged on the chassis at a fixed height and connecting to the end of the tiltable conveyor track, whereby the conveyor track is arranged on the chassis.

Depending on the length of the chassis, it can be desirable to keep the tiltable conveyor track relatively short and to bridge the distance between the tiltable conveyor track and the end of the chassis with a second conveyor track.

A known accordion roller conveyor can further also be coupled to the end of the chassis in order to transport the boxes and items of general cargo which are placed on the tiltable conveyor track further. The accordion roller conveyor enables the device to be moved without the end of the accordion roller conveyor remote from the device having to be uncoupled or having to be co-displaced.

In a preferred embodiment of the device according to the invention two wheels are arranged under the chassis and close to the platform, and at least one driven wheel rotatable around a vertical axis is arranged on the opposite end of and under the chassis.

The two wheels close to the platform provide for stability of the device, also when a person stands on the edge of the platform, while the one driven wheel rotatable around a vertical axis provides for a simple and advantageous drive.

In a preferred embodiment of the device according to the invention the parallelogram-shaped rod system comprises a first pair of parallel rods and a second pair of parallel rods, which are connected to each other for mutual pivoting in a parallelogram, wherein one of the rods of the first pair is arranged perpendicularly of and fixedly on the chassis and wherein the other of the rods of the first pair is arranged perpendicularly of and fixedly on the platform.

In a further preferred embodiment of the device according to the invention operating buttons are arranged inside the periphery of the platform, as seen in vertical direction, for the purpose of controlling the drive means, so that the conveyor track is tilted and the platform coupled thereto is adjusted in the height.

The person on the platform can hereby easily operate the device and thus adjust the platform in the height, or move the device slightly further into a shipping container in order to be able to unload a subsequent layer of boxes.

The operating buttons are preferably arranged in the surface of the platform and/or at the free end of the conveyor track.

When the operating buttons are arranged in the surface of the platform, the person on the platform can operate these buttons with their feet, so that the person can keep their hands free.

In yet another embodiment of the device according to the invention all wheels of the mobile chassis are rotatable around a vertical axis so that the device can also be displaced transversely of the longitudinal direction.

A joystick is preferably arranged on the device, close to the platform, for the purpose of controlling the rotatable wheels and for the purpose of controlling the drive of the chassis.

The use of the joystick provides a more natural operating element, whereby a user can control the device in simple manner and without lengthy training.

These and other features of the invention are further elucidated with reference to the accompanying drawings.
Figure 1 shows a side view of a first embodiment of the device according to the invention.
Figure 2 shows the device according to figure 1 in perspective view in a high position.
Figure 3 shows the device according to figure 1 in perspective view in a low position.

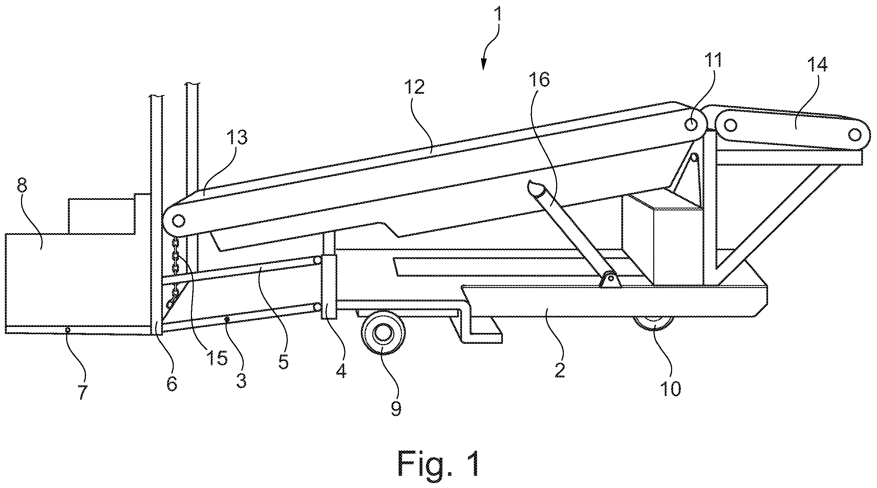

Figure 1 shows a first embodiment of a device 1 according to the invention. Device 1 has a frame 2 on which a platform 7 with side partitions 8 is arranged via a parallelogram construction 3, 4, 5, 6.

On the underside of frame 1 two wheels 9 are provided close to platform 7, and a controllable and driven wheel 10 is provided at the other end of frame 2.

Further provided on frame 1 is a conveyor track 12 which is tiltable around a shaft 11 and which reaches with its free end to a position above platform 7. A second conveyor track 14 is further arranged on frame 2 at a fixed height.

Tiltable conveyor track 12 is coupled via a chain 15 to the platform 7 so that platform 7 co-displaces upward when the tiltable conveyor track 12 is moved upward by means of the linear actuator 16.

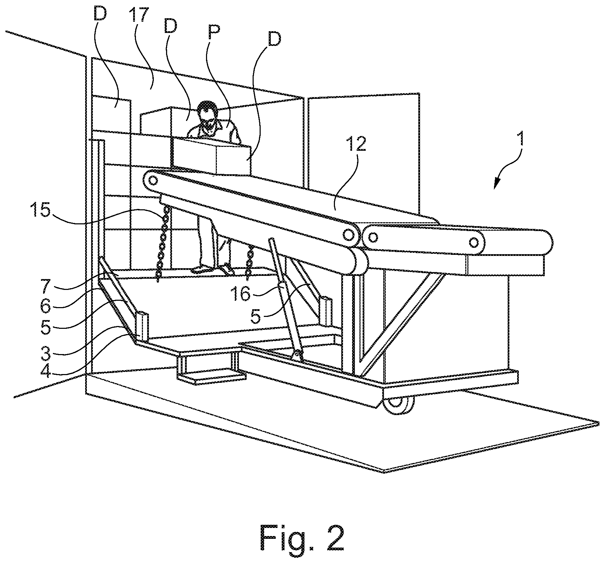

Figure 2 shows the device 1 placed in the opening of a shipping container 17. A person P is standing on platform 7, which is suspended with chain 15 from the upward tilted conveyor track 12. Parallelogram construction 3, 4, 5, 6 ensures that the platform 7 with the person P remains horizontal, irrespective of the height of conveyor track 12.

Stacked in shipping container 17 are boxes D, which can be taken up and placed on conveyor track 12 one by one by the person P.

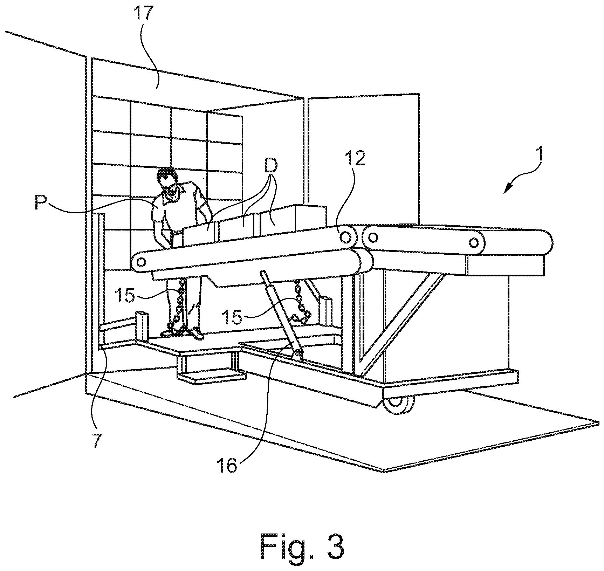

In figure 3 the conveyor track 12 has been tilted downward by linear actuator 16, whereby platform 7 lies on the bottom of shipping container 17 and the chains 15 are slack. The person P can thus also place the boxes D which are situated on the bottom on conveyor track 12 in simple manner.

## Claims

1. Device (1) for unloading general cargo from a shipping container (17) or truck, which device (1) comprises:
- a mobile driven chassis (2, 9, 10);
- a height-displaceable platform (7) arranged on the chassis (2, 9, 10) via a parallelogram-shaped rod system (3, 4, 5, 6) ;
- a conveyor track (12) tiltable around a horizontal axis (11) and arranged with an end on the chassis (2, 9, 10);
- drive means (16) for driving the tilting movement of the conveyor track (12);
- coupling means (15) arranged between the free end of the conveyor track (12) and the platform(7), so that the platform (7) is displaced in the height with the tilting movement of the conveyor track (12),
**characterized in that**
the coupling means (15) comprise a flexible element, such as a cord, cable or chain,
wherein the free end of the conveyor track (12) reaches to a position above the platform (7).

2. Device (1) according to claim 1, wherein the drive means (16) comprise a linear actuator, such as a hydraulic cylinder, wherein the linear actuator (16) is arranged between the chassis (2, 9, 10) and the conveyor track (12), at a distance from the horizontal axis (11).

3. Device (1) according to claim 1 or 2, wherein a second conveyor track (14) is arranged on the chassis (2, 9, 10) at a fixed height and connecting to the end of the tiltable conveyor track (12), whereby the conveyor track (12) is arranged on the chassis (2, 9, 10).

4. Device (1) according to any one of the foregoing claims, wherein two wheels (9) are arranged under the chassis (2, 9, 10) and close to the platform (7) and wherein at least one driven wheel (10) rotatable around a vertical axis is arranged on the opposite end of and under the chassis (2, 9, 10) .

5. Device (1) according to any one of the foregoing claims, wherein the parallelogram-shaped rod system (3, 4, 5, 6) comprises a first pair of parallel rods (4, 6) and a second pair of parallel rods (3, 5), which are connected to each other for mutual pivoting in a parallelogram, wherein one of the rods (4) of the first pair (4, 6) is arranged perpendicularly of and fixedly on the chassis (2, 9, 10) and wherein the other of the rods (6) of the first pair (4, 6) is arranged perpendicularly of and fixedly on the platform (7).

6. Device (1) according to any one of the foregoing claims, wherein operating buttons are arranged inside the periphery of the platform (7), as seen in vertical direction, for the purpose of controlling the drive means (16), so that the conveyor track (12) is tilted and the platform (7) coupled thereto is adjusted in the height.

7. Device (1) according to claim 6, wherein the operating buttons are arranged in the surface of the platform (7) and/or at the free end of the conveyor track (12).

## Patentansprüche

1. Vorrichtung (1) zum Entladen von Stückgut aus einem Schiffscontainer (17) oder LKW, wobei die Vorrichtung (1) umfasst:
- ein bewegliches, angetriebenes Fahrgestell (2, 9, 10);
- eine höhenverschiebbare Plattform (7), die über ein parallelogrammförmiges Stangensystem (3, 4, 5, 6) auf dem Fahrgestell (2, 9, 10) angeordnet ist;
- eine Förderbahn (12), die um eine horizontale Achse (11) herum kippbar ist und mit einem Ende auf dem Fahrgestell (2, 9, 10) angeordnet ist;
- Antriebsmittel (16) zum Antreiben der Kippbewegung der Förderbahn (12);
- Kopplungsmittel (15), die zwischen dem freien Ende der Förderbahn (12) und der Plattform (7) angeordnet sind, sodass die Plattform (7) mit der Kippbewegung der Förderbahn (12) in der Höhe verschoben wird,
**dadurch gekennzeichnet, dass**
die Kopplungsmittel (15) ein flexibles Element, wie etwa eine Schnur, ein Kabel oder eine Kette umfassen,
wobei das freie Ende der Förderbahn (12) eine Position oberhalb der Plattform (7) erreicht.

2. Vorrichtung (1) nach Anspruch 1, wobei die Antriebsmittel (16) eine lineare Betätigungsvorrichtung, wie etwa einen Hydraulikzylinder, umfassen, wobei die lineare Betätigungsvorrichtung (16) zwischen dem Fahrgestell (2, 9, 10) und der Förderbahn (12) in einem Abstand von der horizontalen Achse (11) angeordnet ist.

3. Vorrichtung (1) nach Anspruch 1 oder 2, wobei eine zweite Förderbahn (14) auf dem Fahrgestell (2, 9, 10) in einer festen Höhe angeordnet ist und mit dem Ende der kippbaren Förderbahn (12) verbunden ist, wodurch die Förderbahn (12) auf dem Fahrgestell (2, 9, 10) angeordnet ist.

4. Vorrichtung (1) nach einem der vorstehenden Ansprüche, wobei zwei Räder (9) unter dem Fahrgestell (2, 9, 10) und nahe der Plattform (7) angeordnet sind und wobei mindestens ein angetriebenes Rad (10), das um eine vertikale Achse herum drehbar ist, am gegenüberliegenden Ende von und unter dem Fahrgestell (2, 9, 10) angeordnet ist.

5. Vorrichtung (1) nach einem der vorstehenden Ansprüche, wobei das parallelogrammförmige Stangensystem (3, 4, 5, 6) ein erstes Paar paralleler Stangen (4, 6) und ein zweites Paar paralleler Stangen (3, 5) umfasst, die zum gemeinsamen Schwenken in einem Parallelogramm miteinander verbunden sind, wobei eine der Stangen (4) des ersten Paares (4, 6) senkrecht zu und fest auf dem Fahrgestell (2, 9, 10) angeordnet ist und wobei die andere der Stangen (6) des ersten Paares (4, 6) senkrecht zu und fest auf der Plattform (7) angeordnet ist.

6. Vorrichtung (1) nach einem der vorstehenden Ansprüche, wobei Bedienknöpfe innerhalb des Umfangs der Plattform (7), in vertikaler Richtung gesehen, zum Zwecke des Steuerns der Antriebsmittel (16) angeordnet sind, sodass die Förderbahn (12) gekippt wird und die damit gekoppelte Plattform (7) in der Höhe angepasst wird.

7. Vorrichtung (1) nach Anspruch 6, wobei die Bedienknöpfe in der Oberfläche der Plattform (7) und/oder am freien Ende der Förderbahn (12) angeordnet sind.

## Revendications

1. Dispositif (1) de déchargement de marchandises générales d'un camion ou d'un conteneur d'expédition (17), lequel dispositif (1) comprend :
- un châssis mobile mené (2, 9, 10) ;
- une plate-forme (7) déplaçable en hauteur agencée sur le châssis (2, 9, 10) via un système de tiges en forme de parallélogramme (3, 4, 5, 6) ;
- une bande transporteuse (12) inclinable autour d'un axe horizontal (11) et agencée avec une extrémité sur le châssis (2, 9, 10) ;
- des moyens de pilotage (16) pour entraîner le mouvement d'inclinaison de la bande transporteuse (12) ;
- des moyens de couplage (15) agencés entre l'extrémité libre de la bande transporteuse (12) et la plate-forme (7), de sorte que la plate-forme (7) soit déplacée en hauteur avec le mouvement d'inclinaison de la bande transporteuse (12),
**caractérisé en ce que**
les moyens de couplage (15) comprennent un élément flexible, tel qu'un cordon, un câble ou une chaîne,
dans lequel l'extrémité libre de la bande transporteuse (12) atteint une position au-dessus de la plate-forme (7).

2. Dispositif (1) selon la revendication 1, dans lequel les moyens de pilotage (16) comprennent un actionneur linéaire, tel qu'un vérin hydraulique, dans lequel l'actionneur linéaire (16) est agencé entre le châssis (2, 9, 10) et la bande transporteuse (12), à une distance de l'axe horizontal (11).

3. Dispositif (1) selon la revendication 1 ou 2, dans lequel une seconde bande transporteuse (14) est agencée sur le châssis (2, 9, 10) à une hauteur fixe et reliée à l'extrémité de la bande transporteuse inclinable (12), selon lequel la bande transporteuse (12) est agencée sur le châssis (2, 9, 10).

4. Dispositif (1) selon l'une quelconque des revendications précédentes, dans lequel deux roues (9) sont agencées sous le châssis (2, 9, 10) et près de la plate-forme (7) et dans lequel au moins une roue menée (10) pouvant tourner autour d'un axe vertical est agencée sur l'extrémité opposée du et sous le châssis (2, 9, 10).

5. Dispositif (1) selon l'une quelconque des revendications précédentes, dans lequel le système de tiges en forme de parallélogramme (3, 4, 5, 6) comprend une première paire de tiges parallèles (4, 6) et une seconde paire de tiges parallèles (3, 5), qui sont reliées l'une à l'autre pour un pivotement mutuel dans un parallélogramme, dans lequel l'une des tiges (4) de la première paire (4, 6) est agencée perpendiculairement au et à demeure sur le châssis (2, 9, 10) et dans lequel l'autre des tiges (6) de la première paire (4, 6) est agencée perpendiculairement à et à demeure sur la plate-forme (7).

6. Dispositif (1) selon l'une quelconque des revendications précédentes, dans lequel des boutons d'actionnement sont agencés à l'intérieur de la périphérie de la plate-forme (7), telle que vue dans la direction verticale, dans le but de commander les moyens de pilotage (16), de telle sorte que la bande transporteuse (12) soit inclinée et que la plate-forme (7) couplée à celle-ci soit réglée en hauteur.

7. Dispositif (1) selon la revendication 6, dans lequel les boutons d'actionnement sont agencés dans la surface de la plate-forme (7) et/ou au niveau de l'extrémité libre de la bande transporteuse (12).
